# EUROPEAN PATENT SPECIFICATION

(11) **EP 4 342 560 B1**
(45) Date of publication and mention of the grant of the patent: **07.05.2025**
(21) Application number: 22196482.8
(22) Date of filing: 20.09.2022
(51) Int. Cl.: B01D 46/24, B01D 46/64

(54) **GAS FILTER SYSTEM**
GASFILTERSYSTEM
SYSTÈME DE FILTRATION DE GAZ

(43) Date of publication of application: 27.03.2024
(73) Proprietor: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71691 Freiberg (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(56) References cited:
- WO-A2-2008/045326
- DE-A1- 102018 215 603
- DE-A1- 102020 131 394
- GB-A- 882 647
- JP-A- 2001 286 715

## Description

### Technical field

The present invention refers to a gas filter system comprising
- an outer filter element having a first filter medium arranged between a first end cap and a second end cap; and
- an inner filter element having a second filter medium arranged between a third end cap and a fourth end cap;
the first filter medium being arrangeable to surround the second filter medium.

### Background

Such a filter system is known from DE 10 2018 215 603 A1.

In some applications, it is required to filter a gas flow with two filter elements. Typically, the gas flows through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end.

It is an object of the invention to provide a gas filter system with improved sealing between two filter elements, which are adapted for joint use.

This is achieved by a gas filter system according to claim 1 and use of filter elements according to claim 17. Advantageous embodiments are given in the subclaims and the description.

### Disclosure of the invention

In accordance with the invention, a gas filter system is provided. The gas filter system comprises
- an outer filter element having a first filter medium arranged between a first end cap and a second end cap; and
- an inner filter element having a second filter medium arranged between a third end cap and a fourth end cap.

The first filter medium is arrangeable to surround the second filter medium. The filter media may be hollow-cylindrical or conical, preferably with an essentially circular or oval cross section. The filter media each surround a longitudinal axis. In particular, the filter media may be arranged concentric to a common longitudinal axis. Indications of directions such as radial or axial refer to the longitudinal axis. In principle, the first and third end caps are associated with a first axial end; the second and fourth end caps are associated with a second axial end.

During use of the gas filter system, a gas flow is typically first directed through the first filter medium of the outer filter element and then through the second filter medium of the inner filter element.

According to the invention, the first, third and fourth end caps are open. The first, third and fourth end caps generally have a central opening.

The outer filter element is closed at the second end cap. The second end cap may be a monolithic closed end cap. Alternatively, a closing means may be permanently affixed to the outer filter element for sealing of the second end cap.

According to the invention, the outer filter element has an axial protrusion at the second end cap, which protrusion protrudes into the inner filter element, when the filter elements are arranged for filtering operation of the gas filter system. The protrusion provides guidance between the filter elements, in particular during mounting. The protrusion typically protrudes beyond the fourth end cap of the inner filter element in the axial direction.

Further, according to the invention, the protrusion exhibits a radially outward facing sealing surface. In other words, a radially outward facing sealing surface is formed on the protrusion.

The fourth end cap of the inner filter element has a (second) sealing section for sealing abutment against the sealing surface of the protrusion. In this way, the two filter elements are sealed against each other at the second end. Since the second end cap of the outer filter element, which covers the inner filter element is closed, the filter elements, in particular the inner filter element, are also sealed towards an environment, such as an inlet side of the filter system.

The second sealing section may be an integral part of the fourth end cap. Typically, the second sealing section is made of a material, which is softer than the material of the protrusion. In particular, the sealing section or the fourth end cap in total can be made from polyurethane, preferably polyurethane foam. The protrusion can be made from rigid plastic.

In general, sealing sections described within the context of this invention are softer than the counter-part against which they shall seal. In particular, a respective sealing section can be made from polyurethane, preferably polyurethane foam. The respective counter-part can be made from rigid plastic.

Preferably, the protrusion is integrally formed with a support tube of the outer filter element. In other words, the support tube closes the second end cap and forms the protrusion. The support tube stiffens the outer filter element. The support tube can be partially embedded in the second end cap.

The second end cap can have at least one support leg for axial support of the outer filter element against a housing. The support leg can be integrally made with the second end cap.

The first end cap of the outer filter element can have a first sealing section for sealing abutment against a housing, preferably in the axial direction. Alternatively or additionally, the first sealing section may provide radial sealing abutment against the housing.

The third end cap of the inner filter element can have a third sealing section for sealing abutment against a housing, preferably in the radial direction. Alternatively or additionally, the third sealing section may provide axial sealing abutment against the housing.

Preferably, the first end cap of the outer filter element and the third end cap of the inner filter element are sealed against each other. Gas flow between the filter elements from an environment such as an inlet side, or into the environment from between the filter elements is thereby prevented. This ensures that the gas flows through the two filter elements consecutively.

The first end cap may have a fourth sealing section for sealing abutment against the third end cap, preferably in the radial direction.

Alternatively, the third end cap may have a fourth sealing section for sealing abutment against the first end cap, preferably in the radial direction.

Preferably, the gas filter system further comprises a housing, in which the inner and outer filter elements are arrangeable. In a mounted state, the filter elements are arranged inside the housing. Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

The housing may have a central tube, which extends into the inner filter element at the third end cap in a mounted state of the filter system. The central tube provides guidance to the inner filter element and support to the second filter medium.

The central tube can be held at an axial collar of the housing. This is advantageous for manufacturing the filter housing. A snap fit may be provided between the collar and the central tube.

The third end cap can be sealed against the collar or the central tube. In particular, the third sealing section of the third end cap may sealingly abut the collar or the central tube. In this way, the inside of the inner filter element can be conveniently sealed towards the housing.

It may be provided, that the protrusion and the central tube overlap each other in the axial direction. Mutual guidance and support between the central tube and the outer filter element can be achieved in this way. This can also facilitate mounting of the filter system. In particular, the protrusion may engage into the central tube. In other words, the central tube can surround the protrusion radially outwardly.

Preferably, the housing has a dome, which protrudes into the protrusion at the second end cap. The dome can provide guidance during mounting and in particular additional support to outer filter element during use of the filter system.

It may further be provided, that the dome and the central tube overlap each other in the axial direction. Undesired movement of the filter elements during operation can be effectively reduced with this design. Upon heavy vibration, the central tube can bear against the dome via the protrusion, which is arranged between the central tube and the dome.

The first or the second filter medium, in particular the second filter medium of the inner filter element, can have gas-adsorbing properties and preferably contains activated carbon. Typical harmful gases are SO₂, NOₓ and NH₃.

The first or the second filter medium, in particular the first filter medium of the outer filter element, can be made with cellulose.

The first and/or the second filter medium may be pleated.

The invention also relates to the use of an outer filter element and/or an inner filter element in a gas filter system according to the invention, as described above. The gas filter system may be used for cathode air filtration of a fuel cell in an electric vehicle.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a first embodiment of a gas filter system according to the invention, the gas filter system comprising an outer filter element, an inner filter element and a housing, in a schematic sectional view;
- Fig. 2: shows the outer filter element of the gas filter system of Fig. 1, in a schematic sectional view;
- Fig. 3: shows the inner filter element of the gas filter system of Fig. 1, in a schematic sectional view;
- Fig. 4: shows a first end of the filter system of Fig. 1 in an enlarged view;
- Fig. 5: shows a second end of the filter system of Fig. 1 in an enlarged view;
- Fig. 6: shows a first end of a second embodiment of a filter system according to the invention in a schematic sectional view;
- Fig. 7: shows a first end of a third embodiment of a filter system according to the invention in a schematic sectional view.

### Detailed description

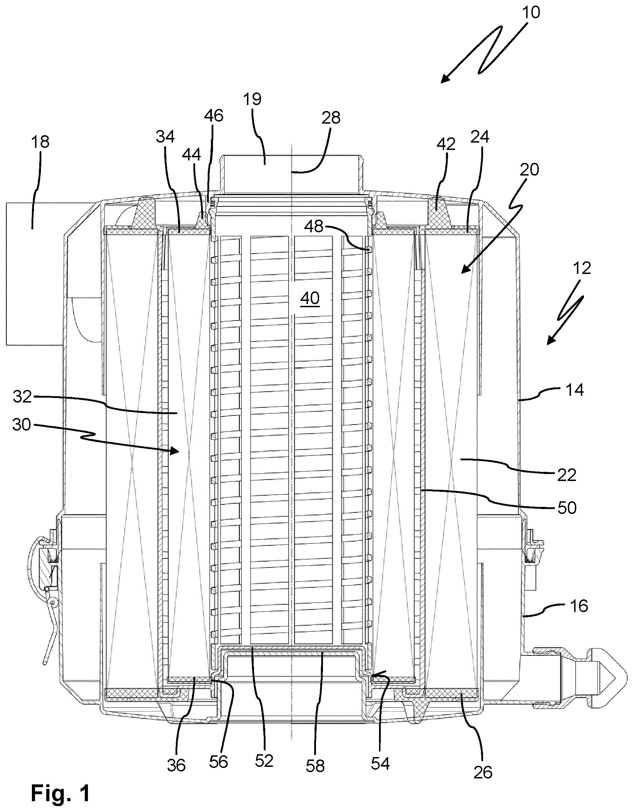

**Figure 1** shows a gas filter system **10.** The filter system 10 comprises a housing **12.** The housing has a first housing part **14** and a second housing part **16,** which are attachable to each other. An inlet **18** allows gas to enter the housing 12. Here the inlet 18 is formed at the first housing part 14. An outlet **19** for filtered gas is also formed at the first housing part 14. The housing parts 14, 16 can be made from metal and/or rigid plastic.

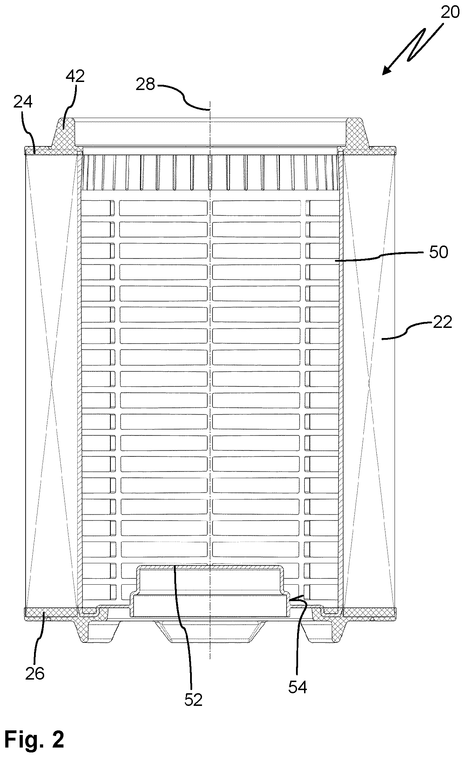

The filter system 10 further comprises an outer filter element **20,** see also **Figure 2****.** The outer filter element 20 comprises a first filter medium **22.** The first medium 22 is contained between a first end cap **24** and a second end cap **26.** The first filter medium 22 surrounds a longitudinal axis **28** in a ciruclar manner. The first filter medium 22 can be made from pleated cellulose paper.

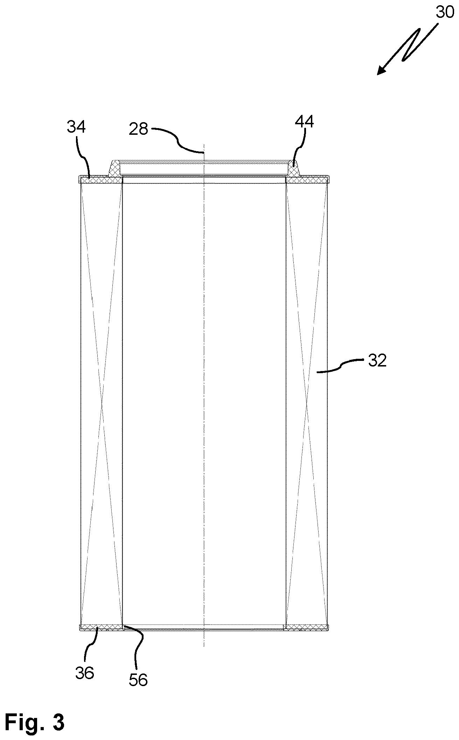

The filter system 10 further comprises an inner filter element **30,** see also **Figure 3****.** The inner filter element 30 comprises a second filter medium **32.** The second medium 32 is contained between a third end cap **34** and a fourth end cap **36.** The second filter medium 32 also surrounds the longitudinal axis 28 in a ciruclar manner. The second filter medium 32 can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

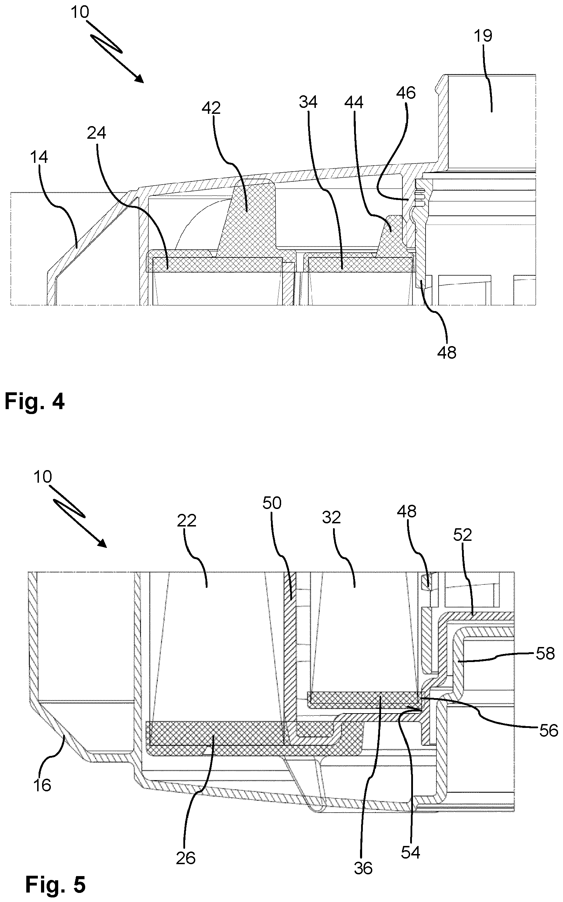

At a first end of the filter system 10, the first end cap 24 is arranged to surround the third end cap 34, see also **Figure 4****.** The first end cap 24 and the third end cap 34 each have a central opening, see also Figures 2 and 3, respectively. The outlet 19 is in fluid communication with a clean side **40** within the inner filter element 30, cf. Figure 1.

A first sealing section **42** axially protrudes form the first end cap 24. The first sealing section 42 sealingly abuts the first housing part 14 in the axial direction. Here, the first end cap 24 with the first sealing section 42 is integrally made from polyurethane foam.

A third sealing section **44** axially protrudes from the third end cap 34. The third sealing section 44 sealingly abuts the first housing part 14 in the radial direction. In particular, the third sealing section sealingly rests against a collar **46,** which axially protrudes into the housing 12 at the outlet 19. Here, the third end cap 34 and the third sealing section 44 are integrally made from polyurethane foam.

A central tube **48** of the housing 12 is held at the axial collar 46. The central tube 48 extends through the opening of the third end cap 34 towards the fourth end cap 36. The central tube 48 can be made from rigid plastic.

The outer filter element comprises a support tube **50.** The support tube extends from the first end cap 24 to the second end cap 26 on the inside of the first filter medium 22. The support tube 50 may be partially embedded in the first and/or second end cap 24, 26. The support tube 50 can be made from rigid plastic.

At the second end, the support tube 50 sealingly closes the outer filter element 20. At the second end cap 26, the support tube 50 forms a closed protrusion **52,** see also **Figure 5****.** The protrusion 52 extends into the clean side of the inner filter element 30 through a central opening in the fourth end cap 36 of the inner filter element 30.

The fourth end cap 36 is sealed against the protrusion 52. At the protrusion 52, a sealing surface **54,** which faces radially outwardly is formed. A second sealing section **56** is formed at the opening of the fourth end cap 36. Here, the fourth end cap 36 and the second sealing section 56 are integrally made from polyurethane foam. The second sealing section 56 sealingly abuts the sealing surface 54 of the protrusion 52 in the radial direction.

The central tube 48 of the housing 12 and the protrusion 52 of the outer filter element 20 overlap each other along the longitudinal axis 28. The protrusion 52 may be tapered above the sealing surface 54 in order to extend into the central tube 48.

The housing may have a dome **58.** Here, the dome 58 is formed at the second housing part 16. The dome 58 extends towards the inside of the inner filter element 30. In particular, the dome 58 extends into the protrusion 52 of the outer filter element 20. More particularly, the dome 58 and the central tube 48 overlap each other along the longitudinal axis 28.

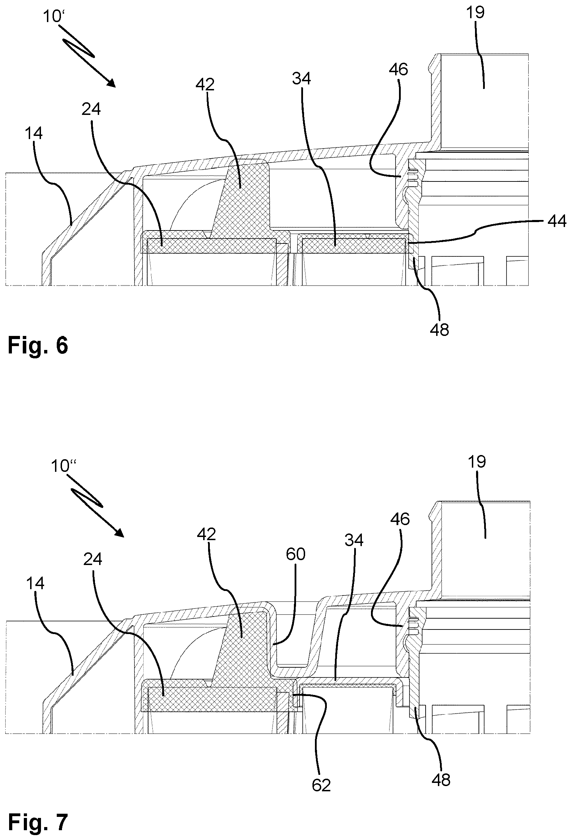

A second embodiment of the gas filter system **10',** which is partially depicted in **Figure 6****,** corresponds substantially to the first embodiment of the gas filter system 10, cf. Figures 1 to 5 and the description above. The filter system 10' differs from the gas filter system 10 in that, in the second embodiment, the third endcap 34 is sealed against the central tube 48. The third sealing section 44 sealingly abuts the central tube 48 in the radial direction, here slightly below the collar 46.

A third embodiment of the gas filter system **10",** which is partially depicted in **Figure 7****,** is also substantially identical to the first embodiment of the gas filter system 10, cf. Figures 1 to 3.

In the third embodiment, the first end cap 24 of the outer filter element 20 is axially and radially sealed against the housing 12. The first housing part 14 has a circumferential rib **60,** against which the first sealing section 42 of the first end cap 24 rests in the radial direction.

The first end cap 24 of the outer filter element 20 and the third end cap 34 of the inner filter element 30 are sealed against each other. The first end cap 24 also has a fourth sealing section **62.** The first end cap 24 with the first sealing section 42 as well as the fourth sealing section 62 are integrally made from polyurethane foam. The third end cap 34 is made from rigid plastic and glued to the second filter medium 32. The fourth sealing section 62 sealingly abuts the third end cap 34 in the radial direction.

### Reference Numbers

Gas filter system **10; 10'; 10"**
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**
Clean side **40**
First sealing section **42**
Third sealing section **44**
Collar **46**
Central tube **48**
Support tube **50**
Protrusion **52**
Sealing surface **54**
Second sealing section **56**
Dome **58**
Rib **60**
Fourth sealing section **62**

## Claims

1. Gas filter system (10; 10'; 10") comprising
- an outer filter element (20) having a first filter medium (22) arranged between a first end cap (24) and a second end cap (26); and
- an inner filter element (30) having a second filter medium (32) arranged between a third end cap (34) and a fourth end cap (36);
the first filter medium (22) being arrangeable to surround the second filter medium (32);
wherein the first, third and fourth end caps (24, 34, 36) are open;
wherein the outer filter element (20) is closed at the second end cap (26);
wherein the outer filter element (20) has an axial protrusion (52) at the second end cap (26), which protrusion (52) protrudes into the inner filter element (30) and which exhibits a radially outward facing sealing surface (54);
and wherein the forth end cap (36) of the inner filter element (30) has a second sealing section (56) for sealing abutment against the sealing surface (54) of the protrusion (52).

2. Gas filter system (10; 10'; 10") according to claim 1, wherein the protrusion (52) is integrally formed with a support tube (50) of the outer filter element (20).

3. Gas filter system (10; 10'; 10") according to any one of the preceding claims, wherein the first end cap (24) of the outer filter element (20) has a first sealing section (42) for sealing abutment against a housing (12), preferably in the axial direction.

4. Gas filter system (10; 10') according to any one of the preceding claims, wherein the third end cap (34) has a third sealing section (44) for sealing abutment against a housing (12), preferably in the radial direction.

5. Gas filter system (10") according to any one of the preceding claims, wherein the first end cap (24) of the outer filter element (20) and the third end cap (34) of the inner filter element (30) are sealed against each other.

6. Gas filter system (10") according to claim 5, wherein the first end cap (24) has a fourth sealing section (62) for sealing abutment against the third end cap (34), preferably in the radial direction.

7. Gas filter system according to claim 5, wherein the third end cap (34) has a fourth sealing section for sealing abutment against the first end cap (24), preferably in the radial direction.

8. Gas filter system (10; 10'; 10") according to one of the preceding claims further comprising a housing (12), in which the outer and inner filter elements (20, 30) are arrangeable.

9. Gas filter system (10; 10'; 10") according to claim 8, wherein the housing (12) has a central tube (48), which extends into the inner filter element (30) at the third end cap (36).

10. Gas filter system (10; 10'; 10") according to claim 9, wherein the central tube (48) is held at an axial collar (46) of the housing (12).

11. Gas filter system (10; 10') according to claim 10, wherein the third end cap (34) is sealed against the collar (46) or the central tube (48).

12. Gas filter system (10; 10'; 10") according to any one of claims 9 to 11, wherein the protrusion (52) and the central tube (48) overlap each other in the axial direction.

13. Gas filter system (10; 10'; 10") according to any one of claims 8 to 12, wherein the housing (12) has a dome (58), which protrudes into the protrusion (52) at the second end cap (26).

14. Gas filter system (10; 10'; 10") according to any one of claims 9 to 12 and according to claim 13, wherein the dome (58) and the central tube (48) overlap each other in the axial direction.

15. Gas filter system (10; 10'; 10") according to any one of the preceding claims, wherein the first or the second filter medium (22, 32), in particular the second filter medium (32) of the inner filter element (30), has gas-adsorbing properties and preferably contains activated carbon.

16. Gas filter system (10; 10'; 10") according to one of the preceding claims, wherein the first or the second filter medium (22, 32), in particular the first filter medium (22) of the outer filter element (20), is made with cellulose.

17. Use of an outer filter element (20) and/or an inner filter element (30) in a gas filter system (10; 10'; 10") according to one of the preceding claims.

## Patentansprüche

1. Gasfiltersystem (10; 10'; 10") umfassend
- ein äußeres Filterelement (20) mit einem ersten Filtermedium (22), das zwischen einer ersten Endkappe (24) und einer zweiten Endkappe (26) angeordnet ist; und
- ein inneres Filterelement (30) mit einem zweiten Filtermedium (32), das zwischen einer dritten Endkappe (34) und einer vierten Endkappe (36) angeordnet ist;
wobei das erste Filtermedium (22) so angeordnet werden kann, dass es das zweite Filtermedium (32) umgibt;
wobei die erste, dritte und vierte Endkappe (24, 34, 36) offen sind;
wobei das äußere Filterelement (20) an der zweiten Endkappe (26) geschlossen ist;
wobei das äußere Filterelement (20) einen axialen Vorsprung (52) an der zweiten Endkappe (26) hat, wobei der Vorsprung (52) in das innere Filterelement (30) ragt und eine radial nach außen weisende Dichtfläche (54) aufweist;
und wobei die vierte Endkappe (36) des inneren Filterelements (30) einen zweiten Dichtungsabschnitt (56) zum dichtenden Anliegen an der Dichtfläche (54) des Vorsprungs (52) hat.

2. Gasfiltersystem (10; 10'; 10") nach Anspruch 1, wobei der Vorsprung (52) integral mit einem Stützrohr (50) des äußeren Filterelements (20) geformt ist.

3. Gasfiltersystem (10; 10'; 10") nach einem der obigen Ansprüche, wobei die erste Endkappe (24) des äußeren Filterelements (20) einen ersten Dichtungsabschnitt (42) zum dichtenden Anliegen an einem Gehäuse (12), vorzugsweise in Axialrichtung, hat.

4. Gasfiltersystem (10; 10') nach einem der obigen Ansprüche, wobei die dritte Endkappe (34) einen dritten Dichtungsabschnitt (44) zum dichtenden Anliegen an einem Gehäuse (12), vorzugsweise in Radialrichtung, hat.

5. Gassfiltersystem (10") nach einem der obigen Ansprüche, wobei die erste Endkappe (24) des äußeren Filterelements (20) und die dritte Endkappe (34) des inneren Filterelements (30) gegeneinander abgedichtet sind.

6. Gasfiltersystem (10") nach Anspruch 5, wobei die erste Endkappe (24) einen vierten Dichtungsabschnitt (62) zum dichtenden Anliegen an die dritte Endkappe (34), vorzugsweise in Radialrichtung, hat.

7. Gasfiltersystem nach Anspruch 5, wobei die dritte Endkappe (34) einen vierten Dichtungsabschnitt zum dichtenden Anliegen an die erste Endkappe (24), vorzugsweise in Radialrichtung, hat.

8. Gasfiltersystem (10; 10'; 10") nach einem der obigen Ansprüche, ferner umfassend ein Gehäuse (12), in dem die äußeren und inneren Filterelemente (20, 30) anordenbar sind.

9. Gasfiltersystem (10; 10'; 10") nach Anspruch 8, wobei das Gehäuse (12) ein Mittelrohr (48) hat, das sich in das innere Filterelement (30) an der dritten Endkappe (36) erstreckt.

10. Gasfiltersystem (10; 10'; 10") nach Anspruch 9, wobei das Mittelrohr (48) an einem axialen Kragen (46) des Gehäuses (12) gehalten wird.

11. Gasfiltersystem (10; 10') nach Anspruch 10, wobei die dritte Endkappe (34) gegen den Kragen (46) oder das Mittelrohr (48) abgedichtet ist.

12. Gasfiltersystem (10; 10'; 10") nach einem der Ansprüche 9 bis 11, wobei der Vorsprung (52) und das Mittelrohr (48) einander in Axialrichtung überlappen.

13. Gasfiltersystem (10; 10'; 10") nach einem der Ansprüche 8 bis 12, wobei das Gehäuse (12) eine Wölbung (58) hat, die in den Vorsprung (52) an der zweiten Endkappe (26) vorsteht.

14. Gasfiltersystem (10; 10'; 10") nach einem der Ansprüche 9 bis 12 und nach Anspruch 13, wobei die Wölbung (58) und das Mittelrohr (48) einander in Axialrichtung überlappen.

15. Gassfiltersystem (10; 10'; 10") nach einem der obigen Ansprüche, wobei das erste oder das zweite Filtermedium (22, 32), insbesondere das zweite Filtermedium (32) des inneren Filterelements (30), gasadsorbierende Eigenschaften hat und vorzugsweise Aktivkohle hat.

16. Gassfiltersystem (10; 10'; 10") nach einem der obigen Ansprüche, wobei das erste oder das zweite Filtermedium (22, 32), insbesondere das erste Filtermedium (22) des äußeren Filterelements (30), aus Zellulose besteht.

17. Verwendung eines äußeren Filterelements (20) und/oder eines inneren Filterelements (30) in einem Gasfiltersystem (10; 10'; 10") nach einem der vorigen Ansprüche.

## Revendications

1. Système de filtration des gaz (10; 10'; 10") comprenant
- un élément filtrant extérieur (20) ayant un premier milieu filtrant (22) disposé entre un premier bouchon d'extrémité (24) et un deuxième bouchon d'extrémité (26); et
- un élément filtrant intérieur (30) ayant un deuxième milieu filtrant (32) disposé entre un troisième bouchon d'extrémité (34) et un quatrième bouchon d'extrémité (36);
le premier milieu filtrant (22) pouvant être disposé de manière à entourer le deuxième milieu filtrant (32);
dans lequel les premier, troisième et quatrième bouchons d'extrémité (24, 34, 36) sont ouverts;
dans lequel l'élément filtrant extérieur (20) est fermé au niveau du deuxième bouchon d'extrémité (26);
dans lequel l'élément filtrant extérieur (20) a une saillie axiale (52) au niveau du deuxième bouchon d'extrémité (26), laquelle saillie (52) fait saillie dans l'élément filtrant intérieur (30) et présente une surface d'étanchéité (54) orientée radialement vers l'extérieur;
et dans lequel le quatrième bouchon d'extrémité (36) de l'élément filtrant intérieur (30) a une deuxième section d'étanchéité (56) pour une butée d'étanchéité contre la surface d'étanchéité (54) de la saillie (52).

2. Système de filtration des gaz (10; 10'; 10") selon la revendication 1, dans lequel la saillie (52) est réalisée d'un seul tenant avec un tube de support (50) de l'élément filtrant extérieur (20).

3. Système de filtration des gaz (10; 10'; 10") selon l'une quelconque des revendications précédentes, dans lequel le premier bouchon d'extrémité (24) de l'élément filtrant extérieur (20) a une première section d'étanchéité (42) pour une butée d'étanchéité contre un boîtier (12), de préférence en direction axiale.

4. Système de filtration des gaz (10; 10') selon l'une quelconque des revendications précédentes, dans lequel le troisième bouchon d'extrémité (34) a une troisième section d'étanchéité (44) pour une butée d'étanchéité contre un boîtier (12), de préférence en direction axiale.

5. Système de filtration des gaz (10") selon l'une quelconque des revendications précédentes, dans lequel le premier bouchon d'extrémité (24) de l'élément filtrant extérieur (20) et le troisième bouchon d'extrémité (34) de l'élément filtrant intérieur (30) sont étanches l'un par rapport à l'autre.

6. Système de filtration des gaz (10") selon la revendication 5, dans lequel le premier bouchon d'extrémité (24) a une quatrième section d'étanchéité (62) pour une butée d'étanchéité contre le troisième bouchon d'extrémité (34), de préférence en direction radiale.

7. Système de filtration des gaz selon la revendication 5, dans lequel le troisième bouchon d'extrémité (34) a une quatrième section d'étanchéité pour une butée d'étanchéité contre le premier bouchon d'extrémité (24), de préférence en direction radiale.

8. Système de filtration des gaz (10; 10'; 10") selon l'une quelconque des revendications précédentes, comprenant en outre un boîtier (12), dans lequel les éléments filtrants extérieur et intérieur (20, 30) peuvent être disposés.

9. Système de filtration des gaz (10; 10'; 10") selon la revendication 8, dans lequel le boîtier (12) a un tube central (48) s'étendant dans l'élément filtrant intérieur (30) au niveau du troisième bouchon d'extrémité (36).

10. Système de filtration des gaz (10; 10'; 10") selon la revendication 9, dans lequel le tube central (48) est maintenu au niveau d'un collier axial (46) du boîtier (12).

11. Système de filtration des gaz (10; 10') selon la revendication 10, dans lequel le troisième bouchon d'extrémité (34) est scellé contre le collier (46) ou le tube central (48).

12. Système de filtration des gaz (10; 10'; 10") selon l'une quelconque des revendications 9 à 11, dans lequel la saillie (52) et le tube central (48) se chevauchent en direction axiale.

13. Système de filtration des gaz (10; 10'; 10") selon l'une quelconque des revendications 8 à 12, dans lequel le boîtier (12) a un dôme (58) faisant saillie dans la saillie (52) au niveau du deuxième bouchon d'extrémité (26).

14. Système de filtration des gaz (10; 10'; 10") selon l'une quelconque des revendications 9 à 12 et selon la revendication 13, dans lequel le dôme (58) et le tube central (48) se chevauchent en direction axiale.

15. Système de filtration des gaz (10; 10'; 10") selon l'une quelconque des revendications précédentes, dans lequel le premier ou le deuxième milieu filtrant (22, 32), notamment le deuxième milieu filtrant (32) de l'élément filtrant intérieur (30), a des propriétés d'adsorption des gaz et contient de préférence du charbon actif.

16. Système de filtration des gaz (10; 10'; 10") selon l'une quelconque des revendications précédentes, dans lequel le premier ou le deuxième milieu filtrant (22, 32), notamment le premier milieu filtrant (22) de l'élément filtrant extérieur (20), est fait de cellulose.

17. Utilisation d'un élément filtrant extérieur (20) et/ou d'un élément filtrant intérieur (30) dans un système de filtration des gaz (10; 10'; 10") selon l'une quelconque des revendications précédentes.
